# EUROPÄISCHE PATENTSCHRIFT

(11) **EP 2 793 364 B1**
(45) Veröffentlichungstag und Bekanntmachung des Hinweises auf die Patenterteilung: **23.03.2016**
(21) Anmeldenummer: 13163932.0
(22) Anmeldetag: 16.04.2013
(51) Int. Cl.: H02K 1/27, H02K 15/03

(54) **Einzelsegmentläufer mit entmagnetisierter Innenseite und Herstellungsverfahren**
Single segment rotor with demagnetised inner side and manufacturing method
Rotor à segments individuels avec face intérieure démagnétisée et procédé de fabrication

(43) Veröffentlichungstag der Anmeldung: 22.10.2014
(73) Patentinhaber: Siemens Aktiengesellschaft, 80333 München (DE)
(72) Erfinder: Kress, Peter, 97633 Alsleben (DE); Müller, Jörg, 97720 Nüdlingen (DE); Schneider, Helmut, 97688 Bad Kissingen (DE); Stäblein, Armin, 97650 Fladungen (DE); Volkmuth, Benjamin, 97717 Sulzthal (DE); Vollmer, Rolf, 36129 Gersfeld (DE)

(56) Entgegenhaltungen:
- EP-A2- 0 237 848
- FR-A1- 2 777 912
- JP-A- 2003 304 670
- US-A1- 2010 277 028
- US-A1- 2012 038 237

## Beschreibung

Die vorliegende Erfindung betrifft einen Einzelsegmentläufer für eine elektrische Maschine, insbesondere für einen Motor oder einen Generator. Darüber hinaus betrifft die vorliegende Erfindung ein Verfahren zum Herstellen eines solchen Einzelsegmentläufers.

Die US 2012/038237 A1 beschreibt einen Rotor mit einem inneren Teil, der im Bereich von Befestigungsstegen für Einzelsegmente kleine Löcher aufweist, die einen hohen magnetischen Widerstand darstellen.

Die FR 2 777 912 A1 beschreibt Verfahren zum Erzeugen von amagnetischen Zonen in Elektroblechen.

Die JP 2003 304670 A beschreibt ein Verfahren zum Eindiffundieren von Substanzen in ein Blechpaket eines Rotors, um seine magnetische Permeabilität zu verringern.

Die US 2010/277028 A1 beschreibt einen Rotor mit nichtmagnetischen Bereichen im Befestigungsbereich der Einzelsegmente.

Die EP 0 237 848 A2 beschreibt einen Rotor mit virtuellen Rotorzähnen, deren magnetische Eigenschaften mittels eines Diffusionsverfahren verändert wurden.

Einzelsegmentläufer für Elektromotoren mit Flusskonzentration zeichnen sich dadurch aus, dass der Läufer sternförmig mit Permanentmagneten bestückt ist, die Permanentmagnete in Bewegungsrichtung gepolt sind und der Zwischenraum zwischen den einzelnen Permanentmagneten jeweils durch ein ferromagnetisches Segment gefüllt ist. Ein solches Einzelsegment wird üblicherweise als Blechpaket gefertigt und kann daher als Blechpaketsegment bezeichnet werden. Die einzelnen Blechpaketsegmente sind, wenn möglich, nicht miteinander verbunden, um Streuungen zu vermeiden.

Der Aufbau und die Fertigung eines Elektromotors mit Magneten in Flusskonzentration bedarf spezieller Techniken: Insbesondere sollte der Aufbau streuungsarm und für eine Serienproduktion geeignet sein. Da ein streuungsarmer Aufbau in der Regel die Verwendung von Blecheinzelsegmenten, d.h. Blechpaketsegmenten, erfordert und so einen erhöhten Fertigungsaufwand mit sich führt, konkurriert ein solcher Aufbau mit einem Serienfertigungsprozess.

Bisherige Ausführungen entsprechender Rotoren sind ein Kompromiss zwischen Rotorsegmenteinzelblechen einerseits und Rotorblechen andererseits, bei denen die Einzelbleche miteinander verbunden sind. Mit kompletten Rotorblechen wird erreicht, dass das Rotorblechpaket mechanisch stabiler und einfacher herstellbar wird, aber ein Teil des Flusses der Magnete kurzgeschlossen wird. Möglich wird dies, z.B. durch stanzpaketierte Läuferpakete, bei denen in definierten Abständen die inneren Unterbrechungsstege erhalten bleiben. Einzelsegmente, wie sie beispielsweise in der nachveröffentlichten europäischen Patentanmeldung EP 12 159 917.9 beschrieben sind, bieten den Vorteil, dass es zu keinem Kurzschluss kommt. Allerdings steigt die Bauteilanzahl und somit der Montage- und Fertigungsaufwand.

Darüber hinaus sollte bei einem Einzelsegmentläufer mit Flusskonzentration das Rotorblech durch "amagnetisches" Material (Permeabilitätszahl µᵣ < 5) zwischen jedem Pol getrennt aufgebaut werden. Dies führt zu einer hohen Anzahl von Einzelsegmenten, die zusammengefügt werden müssen. Dabei entstehen Probleme wegen der komplizierten Herstellung der Einzelsegmente und des komplizierten Zusammenfügens der Einzelsegmente. Außerdem muss durch das amagnetische Material eine getrennte Flussführung realisiert werden. Weiterhin ergeben sich Probleme hinsichtlich des Positionierens und Haltens der Magnete sowie der Momentenübertragung.

Die Aufgabe der vorliegenden Erfindung besteht somit darin, einen Einzelsegmentläufer für eine elektrische Maschine vorzuschlagen, der mit vermindertem Aufwand herstellbar ist. Darüber hinaus soll ein entsprechendes Herstellungsverfahren angegeben werden.

Erfindungsgemäß wird diese Aufgabe gelöst durch einen Einzelsegmentläufer für eine elektrische Maschine
umfassend
- ein Blechpaket mit mehreren Paketebenen, wobei
- in jeder Paketebene ein einziges einteiliges Einzelblech angeordnet ist,
- die Einzelbleche gleich geformt sind und jedes von ihnen mehrere sternförmig angeordnete Segmentabschnitte größtenteils getrennt voneinander durch Magnetaussparungen für Permanentmagnete und eine zentrale Aussparung für eine Welle aufweist, wobei
- die zentrale Aussparung von einem geschlossenen, ringförmigen Innenabschnitt, der einteilig mit dem jeweiligen Einzelblech gebildet ist, umgeben ist, und
- die magnetische Permeabilität des Innenabschnitts gegenüber der magnetischen Permeabilität der Segmentabschnitte vor einem Zusammenfügen der Einzelbleche zu dem Blechpaket reduziert ist, und
- die Permanentmagnete in Magnettaschen, die von den Aussparungen gebildet sind, eingefügt sind.

Darüber hinaus wird erfindungsgemäß bereitgestellt ein Verfahren zum Herstellen eines Einzelsegmentläufers für eine elektrische Maschine
durch
- Bereitstellen einer Vielzahl von einteiligen Einzelblechen, von denen jedes mehrere sternförmig angeordnete Segmentabschnitte im Wesentlichen getrennt voneinander durch Aussparungen für Permanentmagnete und eine zentrale Aussparung für eine Welle aufweist, wobei
- die zentrale Aussparung von einem geschlossenen, ringförmigen Innenabschnitt, der einteilig mit dem jeweiligen Einzelblech gebildet ist, umgeben ist,
- Reduzieren der magnetischen Permeabilität des Innenabschnitts der Einzelbleche gegenüber der magnetischen Permeabilität der Segmentabschnitte vor einem Zusammenfügen der Einzelbleche zu einem Blechpaket,
- Fügen der Einzelbleche zu dem Blechpaket und
- Einfügen der Permanentmagnete in Magnettaschen, die von den Aussparungen gebildet werden.

In vorteilhafter Weise wird also die magnetische Permeabilität des Innenabschnitts reduziert, sodass die Blechpaketsegmente, die jeweils Pakete aus den Segmentabschnitten darstellen, magnetisch voneinander isoliert sind, jedenfalls mehr isoliert als für den Fall, dass die Innenabschnitte in ihrer magnetischen Permeabilität nicht reduziert sind. Auf diese Weise kann also ein streuungsarmer Läuferaufbau gewährleistet werden. Gleichzeitig ist für den Innenabschnitt dann kein separates Teil notwendig, wodurch der Fertigungsaufwand reduziert wird. Durch die Innenabschnitte mit reduzierter magnetischer Permeabilität sind die in axialer Richtung aus den Segmentabschnitten paketierten Blechpaketsegmente in einem gewissen Maß voneinander magnetisch isoliert. Infolgedessen kann von einem Einzelsegmentläufer gesprochen werden, bei dem die Segmente magnetisch einzeln ausgebildet sind.

Jeder Segmentabschnitt der Einzelbleche kann eine oder mehrere Gewichtsreduktionsaussparungen aufweisen. In diese Aussparungen können Träger zur weiteren Stabilisierung des Einzelsegmentläufers eingebracht werden. Alternativ dazu können die Aussparungen auch leer gelassen werden, um das Trägheitsmoment des Einzelsegmentläufers zu reduzieren.

Vorzugsweise besteht jedes Einzelblech aus einem Elektroblech, und in den jeweiligen Innenabschnitt können Elemente eindiffundiert werden, wodurch sich eine Gamma-Struktur (kubisch flächenzentrierte Gitter) in den betroffenen Bereich der Elektrobleche einstellen. Insbesondere können für eine derartige Umstrukturierung die Elemente Nickel, Kobalt, Mangan und/oder Stickstoff für das Eindiffundieren verwendet werden.

Günstigerweise wird in jeder Magnettasche ein Permanentmagnet formschlüssig gehalten. Damit sind die Permanentmagnete ohne zusätzliche Hilfsmittel in dem Blechpaket des Einzelsegmentläufers gehalten.

Das Blechpaket einschließlich der Permanentmagnete kann mit einem Harz getränkt sein. Hierdurch wird der Einzelsegmentläufer nicht nur gegen äußere Einflüsse geschützt, sondern auch zusätzlich stabilisiert.

Eine Wand jeder Magnettasche kann von den Innenabschnitten der Einzelbleche gebildet werden. Dies bedeutet, dass die Magnettaschen an der der Achse bzw. Welle zugewandten Seite von einem "amagnetischen" Material (Permeabilitätszahl uᵣ < 5) abgeschlossen sind. Je niedriger die Permeabilitätszahl des Innenabschnitts ist, desto höher ist der magnetische Isolationsgrad. Die Blechpaketsegmente sind damit an dem der Welle zugewandten Ende voneinander magnetisch mehr oder weniger isoliert.

Außerdem können die Segmentabschnitte jedes Einzelblechs an dessen Außenumfang mittels Stegen paarweise zunächst verbunden sein, und die Stege werden nach dem Einfügen der Permanentmagnete entfernt werden. Die außen am Einzelblech vorgesehenen Stege stabilisieren das Einzelblech ähnlich wie der ringförmige Innenabschnitt. Damit steht bei der Herstellung des Einzelsegmentläufers zunächst ein sehr stabiles Einzelblech bzw. Blechpaket zur Verfügung. Am Ende des Fertigungsverfahrens können die äußeren Stege dann beispielsweise durch Abdrehen entfernt werden, sodass die einzelnen Blechpaketsegmente zumindest außen auch materiell voneinander getrennt und magnetisch vollständig isoliert sind.

Die oben genannten konstruktiven Merkmale ergeben sich aus korrespondierenden Herstellungsschritten, z.B. Stanzen, Stanzpaketieren usw., die das erfindungsgemäße Verfahren konkretisieren. Umgekehrt ergeben sich aus den genannten Verfahrensschritten auch entsprechende strukturelle Merkmale, die den erfindungsgemäßen Einzelsegmentläufer weiterbilden.

Die vorliegende Erfindung wird nun anhand der beigefügten Zeichnungen näher erläutert, in denen zeigen:
- FIG 1: ein Einzelblech eines erfindungsgemäßen Einzelsegmentläufers nach dem Stanzen;
- FIG 2: ein Einzelblech mit einem Innenabschnitt, dessen magnetische Permeabilität reduziert ist;
- FIG 3: eine Stirnseitenansicht eines mit Blechen gemäß FIG 2 gebildeten Blechpakets, das mit Permanentmagneten bestückt und auf eine Welle gefügt ist;
- FIG 4: eine perspektivische Ansicht des Einzelsegmentläufers von FIG 3 und
- FIG 5: eine um 90° gedrehte Ansicht des Einzelsegmentläufers von FIG 4.

Die nachfolgend näher geschilderten Ausführungsbeispiele stellen bevorzugte Ausführungsformen der vorliegenden Erfindung dar.

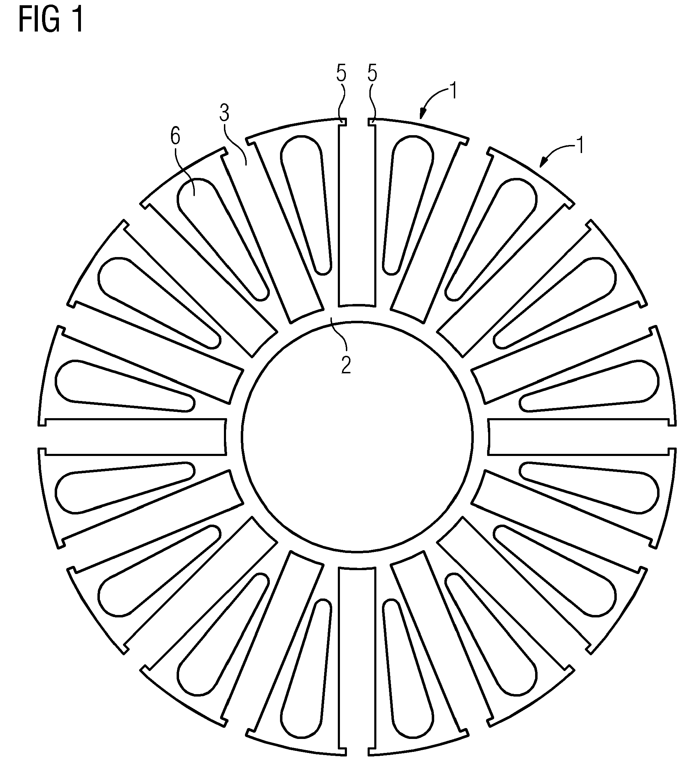

Die Figuren 1 bis 5 zeigen den Herstellungsprozess eines Einzelsegmentläufers entsprechend der vorliegenden Erfindung. Dabei zeigt FIG 1 eine Stirnseitenansicht eines Blechpakets des Einzelsegmentläufers. Die gleiche Ansicht ergibt sich für jedes Einzelblech des Blechpakets, da die Einzelbleche jeweils identische Gestalt besitzen.

Jedes Einzelblech besitzt am Umfang gleichmäßig verteilt angeordnete bzw. sternförmig angeordnete Segmentabschnitte 1. Die Segmentabschnitte 1 besitzen im Wesentlichen eine dreieckförmige Gestalt und ihre Spitze zeigt zum Zentrum des Einzelblechs, das auf der Drehachse des Einzelsegmentläufers liegt. An der zum Zentrum weisenden Spitze sind die Segmentabschnitte 1 durch einen ringförmigen Innenabschnitt 2 miteinander einteilig verbunden. Der Innenbereich des ringförmigen Innenabschnitts 2 dient zur Aufnahme einer Welle.

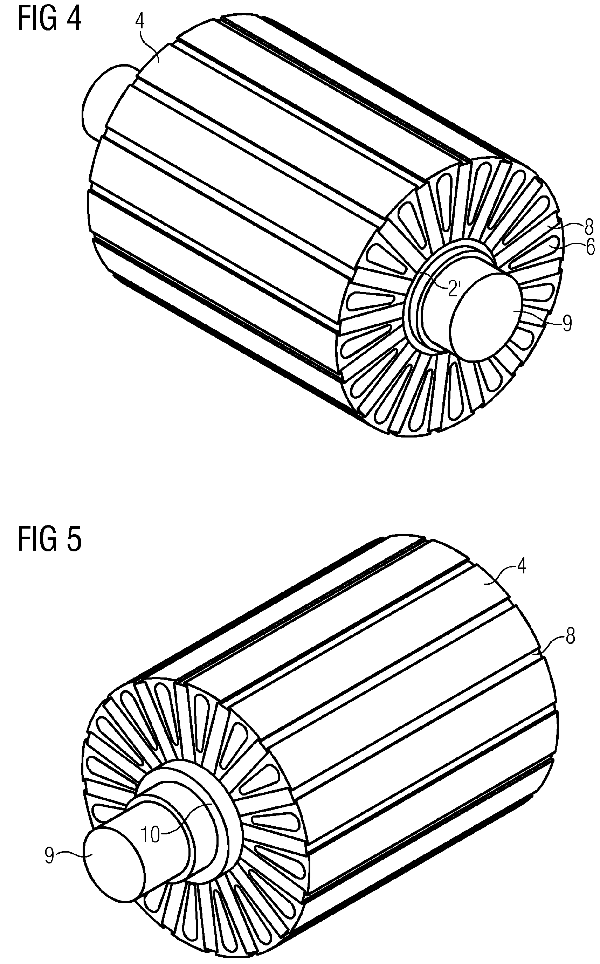

Die Segmentabschnitte 1 jedes Einzelblechs sind durch Magnetaussparungen 3 voneinander getrennt. Ein Stapel an korrespondierenden Segmentabschnitten ergibt ein Einzelsegment 4 (vgl. FIG 4). In dem gesamten Blechpaket sind die Einzelsegmente 4 durch Magnettaschen getrennt, in die am Ende des Herstellungsprozesses (vgl. FIG 4) Permanentmagnete eingefügt sind und die durch die Magnetaussparungen 3 jedes Einzelblechs in axialer Richtung gebildet sind. Bezogen auf jedes Einzelblech besitzt eine Magnetaussparung 3 eine streifenförmige Gestalt und sie erstreckt sich vorzugsweise im Wesentlichen von dem Innenabschnitt 2 bis fast zum Außenumfang des Einzelblechs. Dabei besitzt jeder Segmentabschnitt 1 in der beispielhaften Ausgestaltung zu jeder angrenzenden Magnetaussparung eine Schulter 5 am Außenumfang des Einzelblechs. Durch diese Schultern 5 sind die Magnettaschen bzw. Magnetaussparungen 3 radial nach außen verjüngt, sodass sich für die einzusetzenden Permanentmagnete ein Formschluss radial nach außen ergibt.

Die Wände einer Magnettasche werden also durch die jeweils angrenzenden Einzelsegmente 4 sowie die Innenabschnitte 2 gebildet. An der Außenseite sorgen die Schultern 5 für Halt, aber sie verbinden die benachbarten Einzelsegmente 4 bzw. benachbarten Segmentabschnitte 1 nicht miteinander. Dadurch sind die Einzelsegmente 4 bzw. Segmentabschnitte 1 außen voneinander magnetisch isoliert. Innen sind die Einzelsegmente 4 bzw. Segmentabschnitte 1 jedoch noch durch den Innenabschnitt 2 magnetisch miteinander gekoppelt.

Die Segmentabschnitte 1 können in ihrem Inneren gegebenenfalls Gewichtsreduktionsaussparungen 6 aufweisen. Dadurch kann die Trägheit des Einzelsegmentläufers verbessert werden. Alternativ oder zusätzlich können die Segmentabschnitte 1 in ihrem Inneren auch eine oder mehrere Aussparungen zur Stabilisierung des Blechpakets aufweisen oder die Gewichtsreduktionsaussparungen dafür genutzt werden. In diese Aussparungen werden dann zur Stabilisierung des Blechpakets Stabilisierungselemente (z.B. Biegeträger) eingefügt.

Ein Blechpaket gemäß der vorliegenden Ausführungsform entsteht also durch Stapelung mehrerer Einzelbleche in axialer Richtung übereinander, wobei in jeder Paketebene ein Einzelblech angeordnet ist.

Jedes Einzelblech besitzt hier die in FIG 1 dargestellte Gestalt. Es wird beispielsweise aus einem Vollblech ausgestanzt. Das Blechpaket wird dann vorzugsweise durch Stanzpaketieren hergestellt. Optional werden die Einzelbleche durch Verkleben (Backlack) miteinander verbunden.

Mit der Stanzpaketierung kann also beispielsweise eine bekannte Fertigungstechnologie verwendet werden, die eine hohe Maßhaltigkeit gewährleistet. Vorteilhaft ist außerdem, dass keine Toleranzkette gegeben ist wie bei üblichen separaten Einzelsegmenten. Außerdem ergeben sich Fertigungsvorteile durch die Bauteilreduzierung gegenüber üblichen Einzelsegmentkonzepten, bei denen die Einzelsegmente separat vorliegen.

In einem folgenden Fertigungsschritt werden die Segmentabschnitte 1 magnetisch voneinander getrennt. Dies erfolgt dadurch, dass der Innenabschnitt 2 jedes Einzelblechs amagnetisiert wird. Es entsteht dadurch der amagnetisierte Innenabschnitt 2'. Unter "amagnetisieren" wird hier verstanden, dass die relative Permeabilität unter 5 gebracht wird, vorzugsweise unter 1,5. Ein amagnetisierter Abschnitt hat dann eine Permeabilitätszahl µᵣ < 5 bzw. < 1,5.

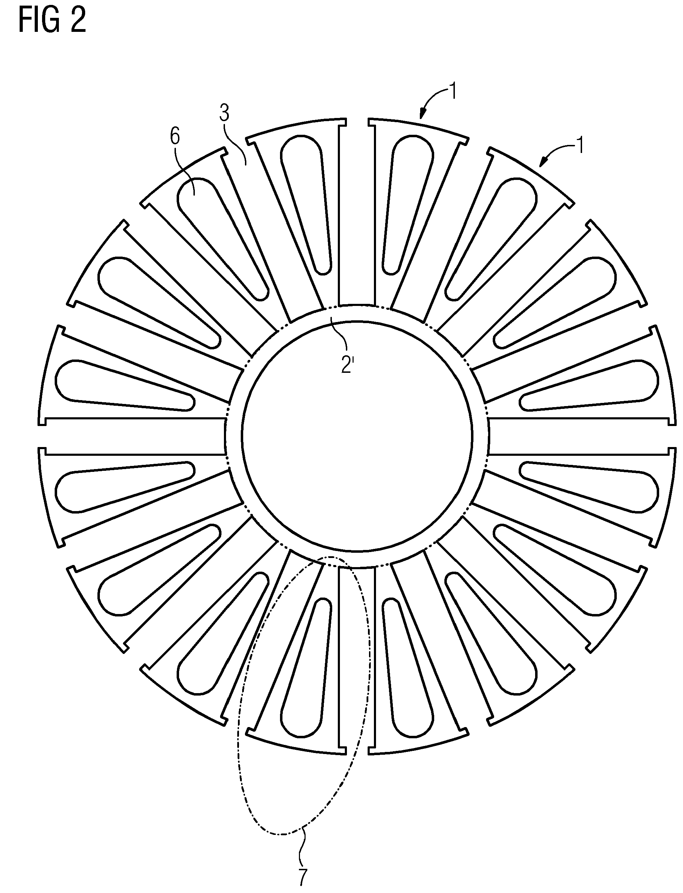

Die Segmentabschnitte 1 sind nach dem Amagnetisierungsschritt nach wie vor materiell über den Innenabschnitt 2' miteinander verbunden. Durch die Amagnetisierung des Innenabschnitts 2 ist also das jeweilige Einzelblech lokal amagnetisiert und die magnetisierbaren Segmentabschnitte sind magnetisch voneinander isoliert, da sie nur über den amagnetischen Innenabschnitt 2' materiell miteinander verbunden sind. Der Kreis 7 deutet in FIG 2 eine magnetisch isolierte Einheit, nämlich den magnetischen Wirkteil eines Einzelsegments an.

Bei einer alternativen Ausführungsform sind die Segmentabschnitte 1 in diesem Fertigungsstadium auch außen noch miteinander verbunden. Zum Ende des Herstellungsverfahrens hin werden dann die Einzelsegmentläufer außen abgedreht, sodass die Magnettaschen oben offen und die Einzelsegmente 4 damit magnetisch voneinander getrennt sind.

Das Amagnetisieren des inneren Bereichs bzw. des inneren Abschnitts 2' des Vollblechschnitts (Einzelblechs) kann durch unterschiedliche Techniken erfolgen. Beispielsweise kann eine Wärmebehandlung erfolgen und/oder die Gefügestruktur geändert werden. Vorzugsweise erfolgt das Amagnetisieren jedoch durch Eindiffundieren spezifischer Elemente in den Stahl bzw. die Elektrobleche. Ziel dabei ist es, die sogenannte "Gammastruktur" (austenitischer Stahl) zu erreichen. Hierzu wird beispielsweise Nickel auf die Innenabschnitte der Bleche aufgetragen und bei erhöhter Temperatur in einem Ofen eindiffundiert. Dadurch verändert sich die Struktur des Stahls und somit seine magnetischen Eigenschaften. Alternativ können auch Kobalt und Mangan in die Bleche eindiffundiert werden, um die gewünschte Amagnetisierung zu erreichen. Prinzipiell sollte nach der Amagnetisierung die Permeabilitätszahl in den Innenabschnitten < 5 betragen. Vorzugsweise liegt sie unter 1,5.

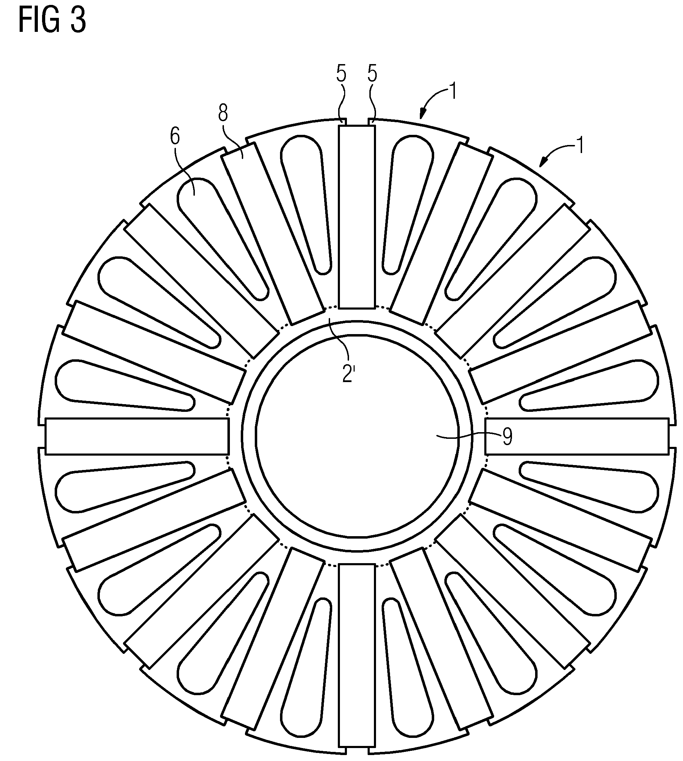

Da durch das Amagnetisieren die mechanische Struktur der Einzelbleche unverändert bleibt, entsteht durch die Paketierung nun ein Blechpaket, in das gemäß FIG 3 Permanentmagnete 8 in die jeweiligen Magnettaschen eingefügt werden können. Die Permanentmagnete 8 sind damit sternförmig in dem Einzelsegmentläufer nach dem Flusskonzentrationsprinzip angeordnet, wobei die Permanentmagnete in Bewegungsrichtung polarisiert sind.

In das Innere des ringförmigen Innenabschnitts 2' ist außerdem eine Welle 9 eingefügt. Durch die amagnetischen Innenabschnitte 2' ist die Welle sowohl von den Einzelsegmenten 1 als auch von den Permanentmagneten 8 magnetisch isoliert. Die Schultern 5 der Segmentabschnitte 1 bzw. Einzelsegmente 4 sorgen für den formschlüssigen Halt der Permanentmagnete 8 bezüglich der radialen Richtung nach außen.

In den Figuren 4 und 5 ist der Einzelsegmentläufer im fertig gestellten Zustand jeweils in einer 3D-Ansicht dargestellt. Die Ansichten sind gegenüber einander um 90° gedreht. In FIG 5 ist zusätzlich zu erkennen, dass die Welle 9 eine Schulter 10 aufweist, die als axialer Anschlag für das gesamte Blechpaket dient.

Der Aufbau des Einzelsegmentläufers ermöglicht die Verwendung eines bekannten Serienwerkstoffs für die Welle 9. Besonders vorteilhaft ist, wie erwähnt, die Verwendung einteiliger Einzelbleche. Wegen der geringen Toleranzkette kann dadurch ein geringer Luftspalt zwischen Rotor und Stator erreicht werden. Die lokale Amagnetisierung des Vollblechs ermöglicht dann die Ausbildung von magnetischen Einzelsegmenten und damit einen streuungsarmen Aufbau.

Vorteilhaft können auch Gewichtsreduktionsaussparungen zur Reduktion der Trägheit genutzt werden, um höhere Beschleunigungen und Maximaldrehzahlen zu erreichen. Als weiteren Vorteil des geschilderten Aufbaus ist zu verzeichnen, dass durch die Positionierung der Permanentmagnete 8 im Blech keine weiteren Bauteile benötigt werden. In einem weiteren Optimierungsschritt können etwaige Luftspalte zwischen Magnet und Blechpakte durch Tränken, beispielsweise mit einem Harz, ausgefüllt werden. Diese Luftspalte könnten anderenfalls zu Bewegungen der Magnete führen, die diese beschädigen bzw. zerstören könnten.

## Patentansprüche

1. Einzelsegmentläufers für eine elektrische Maschine,
ein Blechpaket mit mehreren Paketebenen aufweist, wobei
- in jeder Paketebene ein einziges einteiliges Einzelblech angeordnet ist,
- die Einzelbleche gleich geformt sind, und jedes von ihnen mehrere sternförmig angeordnete Segmentabschnitte (1) größtenteils getrennt voneinander durch Magnetaussparungen für Permanentmagnete (8) und eine zentrale Aussparung für eine Welle (9) aufweist, wobei
- die zentrale Aussparung von einem geschlossenen, ringförmigen Innenabschnitt (2, 2'), der einteilig mit dem jeweiligen Einzelblech gebildet ist, umgeben ist, und
- die magnetische Permeabilität des Innenabschnitts (2, 2') gegenüber der magnetischen Permeabilität der Segmentabschnitte (1) vor einem Zusammenfügen der Einzelbleche zu dem Blechpaket reduziert ist, und
die Permanentmagnete in Magnettaschen, die von den Aussparungen gebildet sind, eingefügt sind.

2. Einzelsegmentläufer nach Anspruch 1, wobei jeder Segmentabschnitt (1) eine oder mehrere Gewichtsreduktionsaussparungen (6) aufweist.

3. Einzelsegmentläufer nach Anspruch 1 oder 2, wobei jedes Einzelblech aus einem Elektroblech besteht, und in den jeweiligen Innenabschnitt (2, 2') Nickel, Kobalt, Mangan und/oder Stickstoff eindiffundiert ist.

4. Einzelsegmentläufer nach einem der vorhergehenden Ansprüche, wobei in jeder Magnettasche ein Permanentmagnet (8) formschlüssig gehalten ist.

5. Einzelsegmentläufer nach einem der vorhergehenden Ansprüche, wobei eine Wand jeder Magnettasche von den Innenabschnitten (2, 2') der Einzelbleche gebildet ist.

6. Einzelsegmentläufer nach einem der vorhergehenden Ansprüche, wobei das Blechpaket mit den Permanentmagneten (8) mit einem Harz getränkt ist.

7. Verfahren zum Herstellen eines Einzelsegmentläufers für eine elektrische Maschine, das folgende Schritte umfasst:
- Bereitstellen einer Vielzahl von einteiligen Einzelblechen, von denen jedes mehrere sternförmig angeordnete Segmentabschnitte (1) im Wesentlichen getrennt voneinander durch Magnetaussparungen (3) für Permanentmagnete (8) und eine zentrale Aussparung für eine Welle aufweist, wobei
- die zentrale Aussparung von einem geschlossenen, ringförmigen Innenabschnitt (2, 2'), der einteilig mit dem jeweiligen Einzelblech gebildet ist, umgeben ist,
- Reduzieren der magnetischen Permeabilität des Innenabschnitts (2, 2') der Einzelbleche gegenüber der magnetischen Permeabilität der Segmentabschnitte (1) vor einem Zusammenfügen der Einzelbleche zu einem Blechpaket,
- Fügen der Einzelbleche zu dem Blechpaket und
- Einfügen der Permanentmagnete (8) in Magnettaschen, die von den Magnetaussparungen (3) gebildet werden.

8. Verfahren nach Anspruch 7, wobei das Reduzieren der magnetischen Permeabilität durch Eindiffundieren eines Elements in jedes Einzelblech erfolgt.

9. Verfahren nach Anspruch 8, wobei als Element für das Eindiffundieren Nickel, Kobalt, Mangan und/oder Stickstoff verwendet wird.

10. Einzelsegmentläufer nach einem der Ansprüche 1 bis 6, wobei die magnetische Permeabilität des Innenabschnitts jedes Einzelblechs < 5 ist.

## Claims

1. Single segment rotor for an electric machine, which has a laminated core with several levels, wherein
- a single one-piece individual sheet is arranged in each level,
- the individual sheets are the same shape, and each of them has a plurality of segment sections (1) arranged in the shape of a star, mostly separated from one another by magnet recesses for permanent magnets (8) and a central recess for a shaft (9), wherein
- the central recess is surrounded by a closed annular inner section (2, 2') which is formed integrally with the respective individual sheet, and
- the magnetic permeability of the inner section (2, 2') is reduced relative to the magnetic permeability of the segment sections (1) prior to the individual sheets being assembled to form a laminated core, and
the permanent magnets are inserted into magnet pockets which are formed by the recesses.

2. Single segment rotor according to claim 1, wherein each segment section (1) has one or more weight-reducing recesses (6).

3. Single segment rotor according to claim 1 or 2, wherein each individual sheet consists of a magnetic steel sheet, and nickel, cobalt, manganese and/or nitrogen is diffused into the respective inner section (2, 2').

4. Single segment rotor according to one of the preceding claims, wherein a permanent magnet (8) is held in a form-fit manner in each magnet pocket.

5. Single segment rotor according to one of the preceding claims, wherein a wall of each magnet pocket is formed by the inner sections (2, 2') of the individual sheets.

6. Single segment rotor according to one of the preceding claims, wherein the laminated core having the permanent magnets (8) is impregnated with a resin.

7. Method for producing a single segment rotor for an electric machine, which comprises the following steps:
- providing a plurality of one-piece individual sheets, each of which has a plurality of segment sections (1) arranged in the shape of a star, essentially separated from one another by magnet recesses (3) for permanent magnets (8), and a central recess for a shaft, wherein
- the central recess is surrounded by a closed annular inner section (2, 2') which is formed integrally with the respective individual sheet, and
- reducing the magnetic permeability of the inner section (2, 2') of the individual sheets relative to the magnetic permeability of the segment sections (1) prior to the individual sheets being assembled to form a laminated core,
- joining the individual sheets to form a laminated core and
- inserting the permanent magnets (8) into magnet pockets which are formed by the magnet recesses (3).

8. Method according to claim 7, wherein the reduction of the magnetic permeability takes place by diffusing an element into each individual sheet.

9. Method according to claim 8, wherein nickel, cobalt, manganese and/or nitrogen is used as an element for the diffusion.

10. Single segment rotor according to one of claims 1 to 6, wherein the magnetic permeability of the inner section of each individual sheet is less than 5.

## Revendications

1. Rotor à segments individuels pour une machine électrique, qui a un paquet de tôles ayant plusieurs plans de paquet, dans lequel
- une tôle individuelle unique d'une seule pièce est disposée dans chaque plan de paquet,
- les tôles individuelles sont conformées pareillement et chacune d'entre elles à plusieurs parties (1) de segment disposées en étoile, séparées pour la plus grande partie les unes des autres par des évidements pour des aimants (8) permanents et par un évidement central pour un arbre (9), dans lequel
- l'évidement central est entouré d'une partie (2, 2') intérieures annulaire fermée, qui est formée d'une seule pièce avec la tôle individuelle respective et
- la perméabilité magnétique des parties (2, 2') intérieures est réduite par rapport à la perméabilité magnétique des parties (1) de segment avant un assemblage des tôles individuelles en le paquet de tôles et
- les aimants permanents sont insérés dans des poches d'aimant, formées par les évidements.

2. Rotor à segments individuels suivant la revendication 1, dans lequel chaque partie (1) de segment a un ou plusieurs évidements (6) de réduction du poids.

3. Rotor à segments individuels suivant la revendication 1 ou 2, dans lequel chaque tôle individuelle est constituée d'une tôle électrique et du nickel, du cobalt, du manganèse et/ou de l'azote est diffusé dans la partie (2, 2') intérieure respective.

4. Rotor à segments individuels suivant l'une des revendications précédentes, dans lequel un aimant (8) permanent est maintenu à complémentarité de forme dans chaque poche d'aimant.

5. Rotor à segments individuels suivant l'une des revendications précédentes, dans lequel un paroi de chaque poche d'aimant est formée par les parties (2, 2') intérieures des tôles individuelles.

6. Rotor à segments individuels suivant l'une des revendications précédentes, dans lequel le paquet de tôles est avec les aimants (8) permanents imprégné d'une résine.

7. Procédé de fabrication d'un rotor à segments individuels pour une machine électrique qui comprend les stades suivants :
- on se procure une pluralité de tôles individuelles d'une seule pièce, dont chacune a plusieurs parties (1) de segments disposées en étoile, séparées sensiblement les unes des autres par des évidements (3) d'aimant pour des aimants (8) permanents et par un évidement central pour un arbre, dans lequel :
- l'évidement central est entouré d'une partie (2, 2') intérieure annulaire fermée, qui est formée d'une seule pièce avec la tôle individuelle respective,
- on réduit la perméabilité magnétique des parties (2, 2') intérieures des tôles individuelles par rapport à la perméabilité magnétique des parties (1) de segment avant un assemblage des tôles individuelles en un paquet de tôles,
- on joint les tôles individuelles en un paquet de tôles et
- on insère les aimants (8) permanents dans les poches d'aimant, qui sont formées par les évidements (3) d'aimant.

8. Procédé suivant la revendication 7, dans lequel on effectue la réduction de la perméabilité magnétique par diffusion d'un élément dans chaque tôle d'aimant.

9. Procédé suivant la revendication 8, dans lequel on utilise du nickel, du cobalt, du manganèse et/ou de l'azote comme élément pour la diffusion.

10. Rotor à segments individuels suivant l'une des revendications 1 à 6, dans lequel la perméabilité magnétique des parties intérieures de chaque tôle individuelle est inférieure à 5.
